# EUROPEAN PATENT APPLICATION

(11) **EP 2 538 641 A1**
(43) Date of publication of application: **26.12.2012**
(21) Application number: 11171212.1
(22) Date of filing: 23.06.2011
(51) Int. Cl.: H04M 1/725, H04L 29/08

(54) **Secure tag management method and system**

(71) Applicant: Swisscom AG, 3050 Bern (CH)
(72) Inventor: Straumann, Hugo, 4653 Obergösgen (CH)
(74) Representative: Scheuzger, Beat Otto

(57) **Abstract**

A system, server and methods are described for initiating a desired function or sequence of functions in a mobile communications device 1 such as a mobile phone by scanning a contactlessly readable tag 4, such as an RFID (NFC) tag. An app running on the mobile communications device 1 uses the unique tag identifying data 5 of the tag 4 to address a tag management server 7 and fetch instructions and/or data 15', from the tag management server 7 for performing the desired function on the mobile communications device 1, the instructions and/or data 15' being selected from data records 15, 16, 17, 18 on the server 7 on the basis of the tag identifying data 5. Further parameters from the tag 4 and/or from the mobile communications device 1 may be provided to the tag management server 7 for selecting the instructions and/or data 15' required for performing the desired function in the mobile communications device 1.

## Description

The present invention relates to the use of mobile communications devices, such as mobile phones, and their use for reading contactless data tags such as near-field communication (NFC) tags.

NFC communication is designed for close-proximity communication between NFC-enabled devices, which may be active (eg mobile phones, or RFID tags with a power source), or passive (such as a more usual transponder RFID tag). Tags may be passive devices.

So-called "smart tags" and "smart posters" are known in the prior art. These contain data which can be read by NFC-enabled mobile devices such as smart-phones. A typical smart tag might have a transponder circuit and a small memory, whose contents can be scanned by a smartphone, for example. As an example, a printed timetable poster at a bus-stop may comprise an RFID tag which may comprise data about bus-services serving that stop, or alternatively a link to a website which may comprise bus timetable data. In another example, the promoter of a particular entertainment event may put up advertising posters around town two weeks before the event, with each poster including an RFID tag containing the URL of the show being staged. By scanning the tag, a potential showgoer may then point his phone's browser at the URL and learn more about, for example, the availability of tickets.

However, such systems are vulnerable to being hacked. It is possible, for example, to overwrite or alter the data stored in the internal memory of an RFID tag. Even so-called "read-only" tags can sometimes be forcibly written, or removed and replaced with a similar tag containing different data. Alternatively, the tag can be scanned and its contents emulated (and changed). If such an abuse occurs, the unsuspecting user who scans the tag expecting to be able to view a ticket-booking site, for example, may instead be confronted by a spoof or malicious site having the potential to attack his smartphone or NFC-enabled device by installing malware or spyware.

Various proposals have been made to make such NFC tag systems more secure. US patent application US2009/0140040 (Wang), for example, describes a method of authenticating the contents of an RFID tag (such as a tag affixed to an object for sale) using an authentication transaction with a website whose address is stored in the tag.

Note that we differentiate in this application between the System Provider, who provides the system infrastructure, the Tag Owner, who administers the functionality and data used in the system, and the User, who uses his or her mobile communications device to scan an NFC-tag and thereby initiates a function on the phone. However, it is possible to implement the system such that two or all of these participants are the same. Similarly, while this application describes the use of contactlessly readable tags such as near-field communication (NFC) tags, it is also possible to implement embodiments of the system or method of the invention using other forms of contactlessly readable tag, such as by optically scanning barcodes, or with a combination of different types of tag.

Prior art systems suffer from the problem that they store data (from the Tag Owner) which is susceptible to being overwritten, faked or otherwise tampered with. NFC tags are intended to be released by the Tag Owner into an uncontrolled space, such as in posters on a city street, where they can be read by any user with an NFC-enabled mobile communications device. Once the tag is out in this uncontrolled space, it is no longer practicable for the Tag Owner or the System Provider to attempt to control the security of the tag-reading transaction, nor to guarantee the authenticity of any process which may be initiated by reading the tag. For example, if the contents of the tag in US2009/0140040 (Wang) is overwritten, or intercepted and emulated, then the result may be that authentication data might be sought from a bogus web address, in which case authentication may be achieved when it is not justified.

A further problem with prior art systems is that it is a relatively onerous task to alter the definition of the actions which are performed as a result of scanning the tag. In the worst case, this task involves re-writing or otherwise amending the contents of each tag. While not technically difficult, this process is excessively laborious if the tags are widely distributed. If the tags comprise a link to a website, then it is possible to update the contents of the website, but this option is still inflexible and would not enable, for example, the contents of the target website to be changed for some tags and not for others.

The various embodiments of the present invention are directed to addressing the above and other problems with the prior art by providing a tag management system for controlling a function of a mobile communications device in dependence upon tag identifying data read from a contactlessly readable tag by the mobile communications device, the system comprising the mobile communications device and a tag management server;
the mobile communications device and the tag management server being capable of remotely communicating with one another,
the mobile communications device comprising a first application for controlling the function of the mobile communications device,
the mobile communications device comprising tag identifying means for contactlessly reading tag identifying data from the contactlessly readable tag,
the mobile communications device comprising data request transmission means for sending a data request signal to the tag management server, the data request signal comprising the tag identifying data,
the tag management server comprising a database comprising one or more data records, the or each data record containing instructions and/or parameters for controlling the application,
the tag management server comprising data request receiving means adapted to receive the data request signal from the first mobile communications device,
the tag management server further comprising data record identifying means adapted to identify, on the basis of the scanned tag identifying data, a first data record among the one or more data records in the database, and
the tag management server further comprising data transmitting means adapted to transmit the one or more instructions and/or parameters of the first data record to the first mobile communications device,
the first application of the mobile communications device being adapted to receive the instructions and/or parameters of the first data record and to execute the said instructions, and/or to process the said parameters, thereby performing the said function of the mobile communications device in dependence on the instructions, and/or the parameters of the first data record selected in dependence of the tag identifying data.

Embodiments of the present invention also aim to provide a tag-management server comprising:
one or more data records in a database, the or each data record comprising one or more instructions and/or parameters for controlling a function of a communications device,
data request receiving means adapted to receive a data request signal comprising scanned tag identifying data from the mobile communications device,
data record identifying means adapted to identify, on the basis of the scanned tag identifying data, a first data record among the one or more data records in the database, and
data transmitting means adapted to transmit the one or more instructions and/or parameters of the first data record to the mobile communications device.

Embodiments of the present invention also aim to provide an application method for a mobile communications device, for executing a function of the mobile communications device in dependence upon tag identifying data read from a contactlessly readable tag by the mobile communications device, the application method comprising:
a tag-reading step, wherein the mobile communications device reads the tag identifying data from the contactlessly readable tag,
a data request step, wherein the mobile communications device transmits a data request signal to a tag-management server, the data request signal comprising at least the tag-identifying data,
a receiving step, wherein the mobile communications device receives from the tag-management server instruction and/or parameter data of a first data record of the tag-management server identified on the basis of the tag-identifying data, and
an execution step, wherein the mobile communication device executes a function in accordance with the instruction and/or parameter data received from the tag-management server.

Embodiments of the present invention also aim to provide a tag management server operating method comprising:
a data record storing step, wherein at least one data record is stored in a database of the tag management server, the at least one data record comprising instruction and/parameter data for controlling a function of a mobile communications device,
a data-request receiving step, wherein a data request signal containing tag-identifying information is received by the tag management server from the mobile communications device,
a data record identifying step wherein a first data record is identified among the one or more data records of the database on the basis of the tag-identifying information, and
a data transmitting step wherein the instruction and/or parameter data of the first data record are transmitted to the mobile communications device.

The transmission of the data request step may be initiated automatically upon completion of the tag reading step.

One or more of the tag-reading step, the data request step, the receiving step and the execution step may be performed or controlled by one or more applications installed in the mobile communications device, and the application method may comprise an application checking step of checking whether the application or applications required to complete the tag-reading step, the data request step, the receiving step and/or the execution step function are operably installed on the mobile communications device and, if not, retrieving one or more missing applications from a second server.

Address information of the second server may be stored in the contactlessly readable tag and read in the tag reading step.

One or more of the tag-reading step, the data request step, the receiving step and the execution step may be performed automatically, without intervention from the user.

The application method may comprise a user-dialog step of acquiring user-input data for controlling the execution step.

According to one embodiment of the application method, an access address of the tag management server may be stored in the mobile communications device.

The access address of the tag management server may be stored in the mobile communications device in encoded and/or encrypted form. Thus the actual address of the tag management server, from which the functions to be carried out are retrieved, may not be accessed by the user of the mobile communications device.

The data request signal may comprise device-identifying data identifying the mobile communications device or a type of the mobile communications device, and wherein the first data record is identified on the basis of the device-identifying data. In this way, the specific function or data retrieved from the server can be tailored to suit a particular mobile communications device, or a particular type of mobile communications device, for example.

The data request signal may comprise user parameters of a user of the mobile communication device, or of a type of the user of the mobile communications device, and wherein the first data record is identified on the basis of the user parameters. The specific data record identified in the first tag management server (and thereby the instructions or parameters retrieved from the server) can be tailored to correspond to a particular user, or a particular type or group of users.

The device-identifying data, and/or the user parameters can thus be combined, in a combination to suit the Tag Owner, for specifying the particular data record in the tag management server from which to retrieve the functional instruction/parameter data.

Because embodiments of the system, server and method of the invention use the tag identifying information (which is either unique to the tag, or to a particular group of tags, and which may be stored in the tag in non-user-writable fashion, instead of being in a user-writeable part of the tag's internal storage) to retrieve the appropriate program data from the server, the mobile app is therefore not reliant on any (tamperable) data in the tag for authenticating the transaction, or for specifying the function(s) to be executed by the mobile communications device as a result of reading the tag.

Since the method and system of secure tag management use the tag identifying data (which is either unique to the tag, or to a particular group of tags, and which is stored in the tag in non-user-writable fashion instead of being in a user-writeable part of the tag's internal storage) to retrieve the appropriate program data from the server, the mobile app is therefore not reliant on any (tamperable) data in the tag for authenticating the transaction, or for specifying the function(s) to be executed by the mobile communications device as a result of reading the tag.

The various embodiments and principles of the system, server and methods of the invention will be better understood from the following detailed description, with reference to the attached drawings, in which:
Figure 1 shows a schematic representation of a "smart tag" reading system of the prior art.
Figure 2 shows a schematic representation of the data exchanged in a method and system in accordance with embodiments of the present invention.
Figure 3 shows a block diagram of the main elements of a system of an embodiment of the invention.

It should be noted that the figures are provided by way of illustration only, and should not be taken as limiting the claimed scope of the invention. Where the same reference numbers have been used in more than one figure, the numbers are intended to refer to the same or corresponding features.

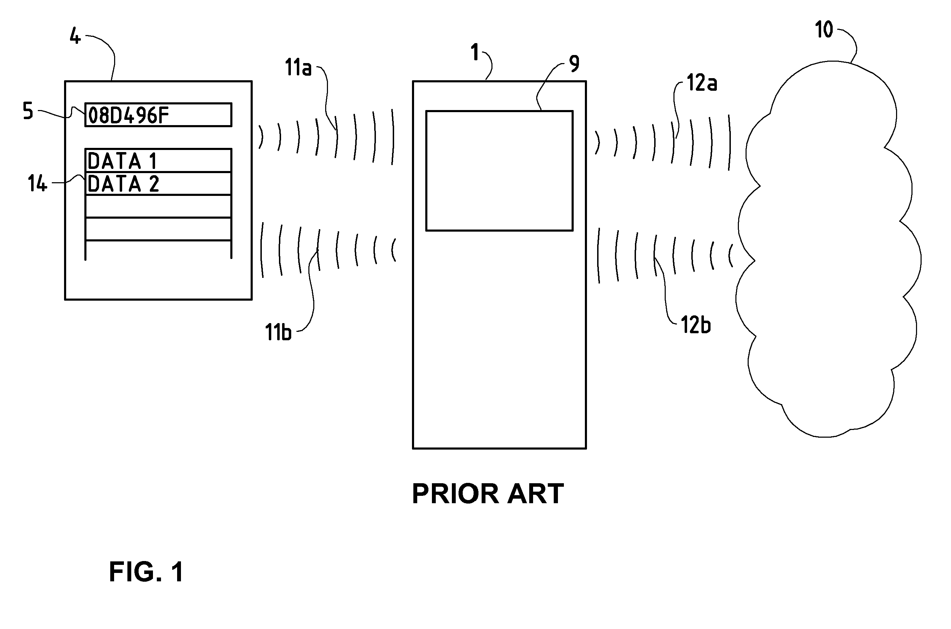

Figure 1 shows a typical implementation of a prior art tag management system. Mobile communications device 1 (for example an NFC-enable smartphone) can read data 14 from an NFC "smart tag" 4 and can wirelessly access a network, 10, such as the internet, for example, using a browser or other application 9 running on the mobile communications device. The NFC-enable phone 1 typically listens constantly for NFC-tag content, and reads the data 14 as soon as it becomes available, automatically activating the browser 9, for example, in response to the content 14 of the tag 4. The data 14 might contain data for directing the browser 9 to a given URL, for example, together with some parameters for the webpage at the specified URL.

The data 14 are written by the Tag-Owner into the tag memory. If the URL or the web page parameters need to be changed, then the new data must be written into the tag memory.

As discussed above, this prior art arrangement is insecure, because the function executed by the mobile communications device 1 is dependent on data 14 which has been written into the tag memory by the Tag Owner. If the data 14 is hacked, then the browser 9 of the mobile communications device 1 may be directed to an unintended and potentially malicious web destination. The more complex the functionality which can be read from the tag 4 and executed in the mobile communications device 1, the greater the possibilities for hacking the functionality or other content of the tag memory, and the greater the security risk associated with scanning the NFC tag 4. A rogue function may be stored in the tag 4, for example, which may send readable data such as the contact list, passwords or other personal data, to an unauthorized or unintended remote server, or which may monitor *bona fide* transactions for passwords etc and then send this sensitive data to the unauthorized remote server (most likely without the user being aware that this has happened). Malware of this type may be capable of gaining control of virtually all parts of the mobile communications device 1, and may be able, for example, to record or relay voice traffic or data traffic, or to send SMS messages or make calls etc.

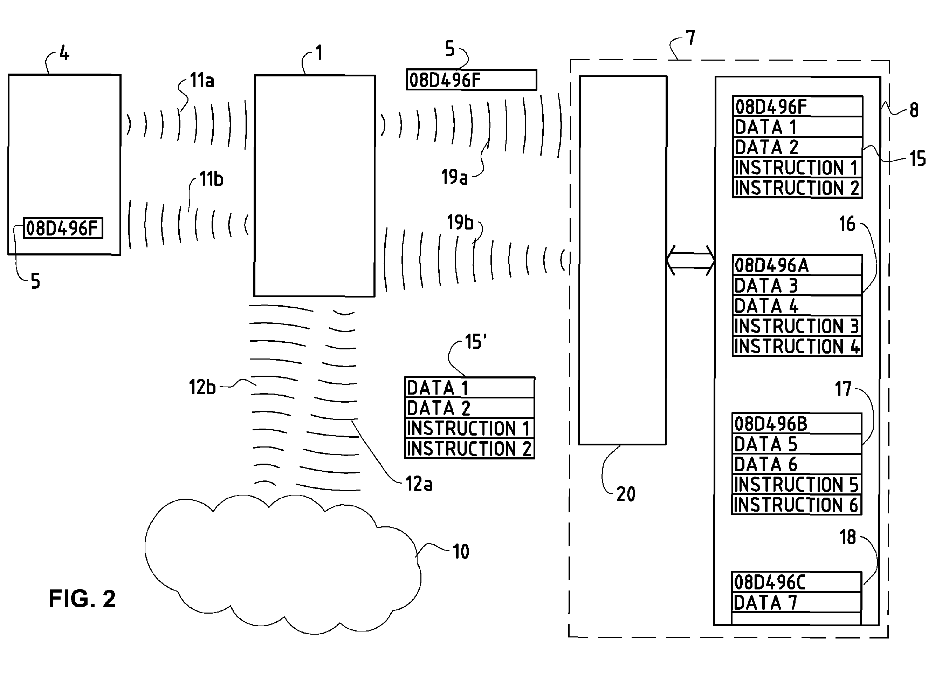

Figure 2 shows a schematic representation of an exemplary embodiment of the system of the invention. A mobile communications device 1 is depicted, as well as a tag 4, a tag management server 7, and a network 10. Figure 2 also shows tag-reading signals 11a and 11 b, network accessing signals 12a and 12b, data requests 19a and 19b, tag identifying data 5, database records 15, 16, 17 and 18, and identified record contents 15'. The mobile communications device 1 may comprise suitable logic, circuitry and/or code enabling it to read data 5 from a tag 5. The mobile communications device 1 may be enabled to process received tag data 5 and may perform various processing on the data 5, which, for example, may comprise initiating the transmission and receiving of data requests 19a and 19b, and/or initiating accessing signals 12a and 12b, respectively. Tag 4 may comprise suitable logic, circuitry and/or code that may enable it to store data 5 which may be accessed contactlessly by a mobile communications device 1, which may comprise an electromagnetic radiation scanning capability, such as, for example, an NFC-enabled mobile communications device 1 or an optical scanner. Tag 4 may be compliant with NFC specifications, but may alternatively or additionally be enabled to operate using other data retrieval protocols. The information stored comprises tag identifying data, 5, which may be stored in a format suitable for NFC communication, but may alternatively or additionally be stored in other data storage or communication formats, such as a barcode.

Embodiments of the system, server and methods which use an NFC tag, 4, and in which only minimal information (eg just the tag identifying data 5) is read from the tag 4, also benefit from an additional advantage. NFC reading may be a relatively slow operation, requiring the mobile communications device 1 to be held in close proximity with the tag 4 for half a second or more in order to establish communication 11a, 11b and receive the complete data 5. If the mobile communications device 1 is moved away from the tag 4 before the reading operation 11a, 11b is completed, then the reading operation will fail. If only minimal information (eg just the tag identifying data 5) is required to be scanned from the tag 4, then the probability of a failed tag reading operation can be greatly reduced, and/or the scanning operation 11a, 11b can be accomplished more quickly.

Tag management server 7 may comprise a database 8, and a server interface 20. The tag management server 7 may comprise suitable logic, circuitry and/or code which may enable the tag management server 7 to store record data 15, 16, 17, 18, which may comprise instruction and/or parameter data representing one or more control functions of a mobile communication device 1, such that the record data 15, 16, 17, 18, can be retrieved via server interface 20. Server interface 20 may comprise logic, circuitry and/or code for receiving data requests 19a from a mobile communications device 1 and accessing the record data 15, 16, 17, 18, stored in database 8 on tag management server 7, and for transmitting identified record data 15' in a data response 19b to the mobile communications device 1, in response to the data request 19a.

Tag 4 contains tag identifying data, 5, but may also contain further data useful to the performance of the desired function in the mobile communications device 1. However, at least the tag identifying data 5 is read by the mobile communications device 1. Tag 4 is a contactlessly readable tag, which may be an RFID or NFC tag, but it may alternatively or additionally comprise a barcode which represents the tag identifying data 5 in optically readable form. The tag identifying data 5 may be unique to a particular tag 4, or the system may also be arranged so that the tag identifying data 5 is unique to a predetermined plurality of tags 4.

The tag 4 and the mobile communications device 1 may exchange NFC protocol signals 11a, 11b (if the tag is an NFC tag), and the tag identifying data 5 may then be read by the mobile communications device 1, whereupon an application running on the mobile communications device 1 may send the tag identifying data 5 as a data request 19a to a tag management server 7 containing a plurality of data records 15, 16, 17, 18. This may be a dedicated app, which we refer to as the SafeTags app, specifically provided for the purpose, which may comprise details (preferably in encrypted form) of the address of the tag management server 7. The app may contain a certificate, such as an SSL certificate, which is then used to establish a secure communications channel, such as an encryption tunnel, to send a data request 19a to the tag management server 7. An interface unit 20 may then determine which of the data records 15, 16, 17, 18 stored in database 8 matches or corresponds to the tag identifying data 5 sent with the data request 19a, and may return the contents of the record 15' thus determined to the mobile communications device 1, as data response signal 19b. The transactions between the mobile communications device 1 and the tag management server 7 are denoted by the reference signs 19a and 19b. The record contents 15' comprise instructions and/or parameters for executing the desired function in the mobile communications device 1. This function may comprise accessing a network such as a LAN, WLAN or a network, 10, such as the internet, by unit of network communication signals 12a and/or 12b.

The tag 4 thus contains the key data which may be used by the mobile communications device 1 to initiate the data request transaction 19a, 19b with the tag management server 7, and which also comprises identifying data 5 for determining which data record 15, 16, 17, 18 in the database 8 contains instruction and/or parameter data 15' which to be sent to the mobile communications device 1. This key data comprises the tag identifying data 5 of the tag 4, which may be stored securely and unalterably, in non-user-writable form in the tag 4, in contrast to the vulnerable storage of data in writable parts of the tag 4. The tag 4 may be distributed out into an uncontrolled space, but the data record, 15, to which the tag identifying data points, is stored in a controlled database 8 which can be continuously monitored, tested and defended against malicious intervention. Furthermore, the contents 15, 16, 17, 18 of the database 8 can be quickly and easily updated.

The function represented by instruction and/or parameter data 15' which is selected to be executed on the mobile communications device 1 may be determined in dependence on two or more parameters sent with data request signal 19a. One of the parameters is the tag identifying data 5 of the tag 4, but further parameters may also be transmitted by the mobile communications device 1 to the tag management server 7 in order to determine which record 15, 16, 17, 18 should be transmitted from the tag management server 7 to the mobile communications device 1 in data response signal 19b. Thus the selection of record data 15' is at least dependent on the tag identifying data 5, but it can also be dependent on data from the mobile communications device 1, for example, or it may be dependent on parameters stored in the SafeTags app (parameters previously gathered from the user or from other applications), or parameters inputted by the user in a dialog with the SafeTags app before the latter sends the data request 19a with the tag identifying data 5 and any parameters. Secondly, the function executed in the mobile communications device 1 can be parameterized (customized) after the required functional definition (instruction and/or parameter data 15') has been downloaded from the tag management server 7. In this case, the instruction and/or parameter data 15' may be configured to obtain yet more parameter data, for example by requesting input from the user of the mobile communications device 1 and/or by retrieving parameters stored in the mobile communications device 1 in order to configure the function(s) 15' to be performed by the mobile communications device 1. The functions of the mobile communications device 1 may be standard smartphone functions, such as browser, send SMS, play video etc, or they may be dedicated applications which can be retrieved and installed from the network 10 under supervision of the SafeTags app. Alternatively, such apps can form part of the functionality of the instruction and/or parameter data which are stored in the data 15' transmitted to the mobile communications device 1 from the tag management server 7. In this last case, the instruction and/or parameter data stored in the data records 15, 16, 17, 18 are applications which can be executed in the mobile communications device 1 to achieve the desired function. Any of these possibilities may be triggered by simply scanning the tag 4, with or without further user interaction in the process.

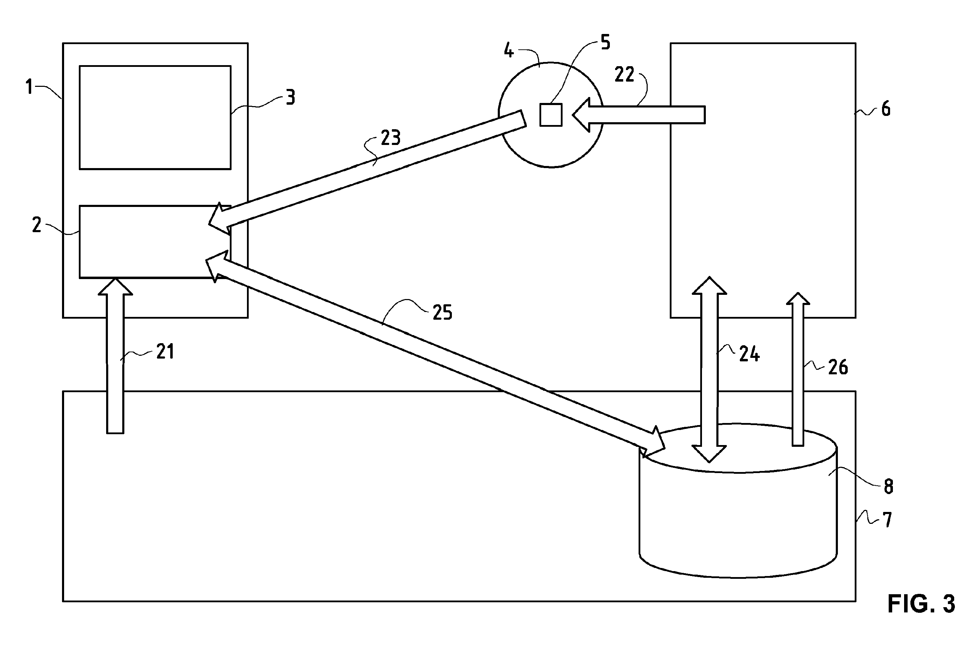

Figure 3 shows in block form various elements of an example system of an embodiment of the invention, and illustrates more clearly the different roles of four of the participating entities in the process. A mobile communications device 1 is depicted, as well as a tag 4, a tag management server, 7, and a Tag Owner 6. Mobile communications device 1 may comprise suitable logic, circuitry and/or code that enable it to read data 5 from a tag 4. The mobile communications device 1 may comprise an application (app) 2, which may enable the mobile communications device 1 to process received tag data 5 and to perform various processing 2 on the data 5, which, for example, may comprise initiating the transmission and receiving of data requests 25 and/or 21 with the server 7. Further applications, 3, such as a browser, SMS client or other apps, may be provided in the mobile communications device 1 to perform functions of the mobile communications device 1 which may be available to be called by the function specified by function data retrieved, 25, from the tag management server, 7. Tag 4 may comprise suitable logic, circuitry and/or code that may enable it to store information 5 which may be accessed contactlessly by a mobile communications device 1, which may comprise an electromagnetic radiation scanning capability, such as, for example, an NFC-enabled device or an optical scanner. Tag 4 may be compliant with NFC specifications, but may alternatively or additionally be enabled to operate using other data retrieval protocols. The information stored comprises tag identifying data, 5, which may be stored in a format suitable for NFC communication, but may alternatively or additionally be stored in other data storage or communication formats, such as a barcode.

Tag management server 7 may comprise a database 8, accessible by the Tag Owner 6 and by the mobile communications device 1. The tag management server 7 may comprise suitable logic, circuitry and/or code which may enable the server 7 to store instruction and/or parameter data in database 8 which may represent one or more control functions of a mobile communication device 1, such that the function data can be retrieved by a mobile communications device 1.

The Tag Owner 6 may issue data tags 4, each with its unique tag identifying data 5 (unique in this case means unique to the tag, or unique to a particular batch of tags), and optionally with additional parameter data. Arrow 22 shows the process of providing the tags 4 with tag identifying data 5. Tag Owner 6 also has access to the contents of the database 8 on the tag management server 7, and can thus define functions to be stored in the database 8. In this way, the Tag Owner 6 can define what function is performed by the mobile communications device 1 when a user of the mobile communication device 1 uses it to read the tag identifying data 5 of tag 4. Arrow 24 represents the process of configuring the contents of database 8 by the Tag Owner 6. Tag management server 7, database 8 and/or app 2 may be provided by a System Owner. If the System Owner is a telecoms provider offering smartphone packages, for example, then the app 2 can be supplied pre-installed on a smartphone 1. Otherwise the app 2 can be installed by the user under controlled conditions (downloading securely from a System Provider's website, for example). This process is denoted by arrow 21. Once the app 2 is installed, the user of the mobile communications device 1 can scan a tag 4, and the functions defined in the appropriate record of the database 8 will be performed by the mobile communications device 1. Arrow 23 represents the reading of tag identifying data 5 and any other data from the tag 4. Arrow 25 represents the sending of the tag identifying data 5 (and any other parameter data) to the tag management server 7 and retrieving the appropriate functional instruction and/or parameter data in return from the server 7, which is then executed by SafeTags app 2 and, if required, additional functional applications 3 in the mobile. Each time such a process takes place, information about the occurrence can be logged in the server and provided as statistical or summary data to the Tag Owner 6. Arrow 26 represents this process.

Critical parts of the system (the secure application 2, the database 8 and the tag identifying data 5) may thus be strongly protected against hacking or malicious intervention, making the system as a whole more secure. In particular, the tag identifying data 5 may contain no data which can be used to trace or access the tag management server 7 or its contents. Such data may be available only to the dedicated SafeTags app 2, and may be stored in unreadable (eg encrypted or compiled) form in the mobile communications device 1. Preferably Only the Tag Owner 6 and the System Owner have access to the contents which he has stored in the database 8. In addition, the function which is to be performed in the mobile communications device 1 may be defined in the database 8 under the exclusive and/or dynamic control of the Tag Owner, with the result that the system is significantly more easily customizable than prior art systems. The tags 4 can be any tags 4 which bear unique, readable tag identifying data 5, which means that the Tag Owner 6 need carry out no laborious preparation of the tags 4. Even if a third party were able to change or emulate or substitute the tag identifying data 5, then he might be able to cause the mobile communications device 1 to fetch instructions and/or parameters from a wrong data record in the database 8. However, the contents of the database 8 may be under the control of the Tag Owner 6, which means that could the Tag Owner 6 could, if necessary, make provision for this eventuality.

For cases where the mobile communications device 1 is not (yet) equipped with the special app 2, access data can be stored in the tag 4 which can be used for downloading and installing the app 2, under controlled, authenticated conditions, from a second server (either from tag management server 7 or a different server).

If the mobile communications device 1 does not yet have the app 2 installed, the tag 4 can alternatively, or additionally, comprise instructions for storing the tag identifying data 5 in the mobile communications device 1 such that the application 2 can be executed later, once it has been installed.

In cases where the app is installed, but there is no connection possible to the tag management server 7 and/or to the network (for example if GSM reception is poor, or if the user's credit is low), then the tag identifying data 5 can be stored by the app 2 until such time as the connection to the network 10 is once again established. Multiple tags 4 can be scanned, without carrying out the process of retrieving the functional instruction and/or parameter data from the tag management server, before the retrieval is carried out.

The tag 4 may be provided with two or more means of representing the tag identifying data 5. For example, an NFC tag 4 may additionally be printed with a barcode to represent tag identifying data 5. If the mobile communications device 1 is not able to read the tag identifying data 5 from the NFC tag, then it can still optically scan the barcode, which may represent the same or corresponding tag identifying data 5.

Note that the Tag Owner 6 may also be the User, for example, or the System Provider may also be the Tag Owner 6, and so on. However, since the app 2 installed on the mobile communications device 1 may be required to have far-reaching access rights to the functions of the mobile communications device 1, then at least the System Owner should be a trusted party, and all interactions relating to the installation of the app 2 and the access to the tag management server(s) 7 should be secure transactions.

The functionality of the app 2 may be customizable by the user of the mobile communications device 1. Thus, the user may specify one or more preferences for the app 2, such as a detailed function of a generally defined function to be performed by the app 2. For example, the app 2 may perform, as a result of retrieving instructions and/or data 15' from the tag management server 7, an "invite friends" function (see Example 1, below). In this case, the user may pre-define the detail of how the "invite friends" function is carried out. He may wish to send an SMS to a particular group of contacts from his contacts list, for example, or to email one or more work colleagues, or post a predefined message on to a social networking site, or any combination of such communication functions which the mobile communications device 1 is capable of performing. The system, server and methods of managing secure tags thus benefit from additional security and practicality in the particular embodiment in which only the tag identifying data 5 is read by the mobile communications device 1.

A significant advantage of the system, server and methods described here is that they offer the possibility of updating dynamically the functionality of a tag-initiated application 2 running on the User's phone. This is particularly useful when accessing dynamic data, but it may also be useful when correcting errors or sub-optimal functions in the function of the application. Since the function is fetched each time from the tag management server's instruction database 8, it can be adapted by the Tag Owner 6 at any time.

The system, server and methods of the invention can be better understood by unit of the following example embodiments:

### Example 1

A circus company has arranged to visit a series of provincial towns, and will be staying in each town for one week at a time. The circus company publicises its performances in each town by unit of colourful posters, each poster bearing one or more NFC tags 4 which can be scanned by punters in each town to obtain more data. By scanning the NFC tag 4 with his mobile communications device 1, the punter can find out about the availability of tickets, as well as any last-minute discounts, and he can book tickets using his mobile communications device 1. The data and any transaction dialog are all provided in the local language, or in the punter's preferred language if this is different, and the price of the tickets is calculated including any local taxes which apply in the town. The punter is also provided with selectable options for, for example, viewing a video clip of the circus, or for sending an SMS (or an MMS with the video clip) to a friend or a group of friends, selected from the contact list on his phone, with an invitation to join him for a particular performance at a discounted last-minute rate. If the punter is under a certain age, a proviso may be displayed, stipulating that children under a certain age must be accompanied by an adult.

In the above example, the punter is the User, and the circus company is the Tag Owner 6. The circus company commissions several hundred printed posters for the tour, each poster with an integral NFC tag 4 containing a unique tag identifying data 5. A barcode may be printed on each poster, containing tag identifying data 5, which can be scanned by punters having mobile communications devices without NFC-readers. The posters are produced several months before the tour begins, and the circus promoters do not know in advance how many posters will be required for each town the circus is due to visit. The circus promoters can adapt the performance schedule in each town, depending on such factors as the weather, and the local demand for tickets.

The System Provider in this example is a national mobile telecoms operator, which provides its users' mobile phones 1 with a secure app 2 for reading NFC tags 4. The System Provider also maintains a secure database 8 to which only the Tag Owner has secure online access. The Tag Owner 6 can record all the tag identifying data 5 from the posters in the database 8 in advance. The allocation of the tag identifying data 5 to particular records in the database 8 can be carried out when the data becomes available, and before the posters are distributed. Thus the tag identifying data 5 are allocated so that the appropriate functions and data 15' will be provided to the User for performances in the User's particular town. With each tag identifying data 5 may be mini-applet comprising instructions which the users' mobile communications devices run autonomously when they scan the particular tag identifying data 5. If the mini-applet comprises some device-specific functions, then there may be multiple records for each tag identifying data 5, and the appropriate record 15' may be selected not just from the tag identifying data 5 but also from a deviceID or a device-type parameter provided by the User's mobile communications device 1 when he or she initiates a data request 19a. User data may also be provided in the data request 19a, either from user profile or preference data stored in the mobile communications device 1, or as the result of a dialog carried out with the user. The functions to be executed in the mobile communications device 1 when the device scans the NFC tag 4 may comprise: automatically stream a videoclip of a circus performance, automatically display current ticket availability and promotional discounts, optionally send an invitation SMS to selected contacts from the device's contact list, or to a Facebook group, and optionally reserve an appointment in the device's calendar.

### Example 2

In this example, a passenger is waiting at a bus stop. The passenger scans an NFC tag 4 on the timetable notice, and receives 19b, 25, an up-to-date list of the buses due to call at that particular bus stop in the next twenty minutes, say, including any current delays. The passenger can wave his mobile phone 1 close to the timetable, and he can rapidly view the relevant information received. The bus information may be stored in a secure database 8, and may be constantly refreshed, such that the data is never more than a little out of date. The public has no access to this database 8, but data can be obtained by unit of a secure function, which is retrieved from the tag management server 7 and run when the passenger scans the tag 4. The retrieval of the function from the tag management server is preferably performed autonomously by the mobile communications device 1, and the autonomously downloaded function is not retained after it has served its purpose. Once the bus timetable has been retrieved for display, the runtime code for the function can be automatically deleted. The mobile communications device may also comprise data from the mobile communications device's list "favourite places" when sending its data request to the tag management server, in which case the functions (applet) returned will comprise executable instructions for retrieving from the bus company's secure database any imminent bus times for two or more of the destinations from the "favourite places" list.

### Example 3

A worker leaves work on her bicycle at 17.15, beginning the 25 minute journey to her home. She works irregular hours, and her partner never knows when to prepare the evening meal, so she usually lets him know when she sets out from work. She has an NFC tag on the handlebar of her bicycle, which she scans quickly with her mobile communications device as she sets off. The phone then automatically sends an SMS to her partner, telling him that she will arrive at 17.40. If she has enabled the appropriate option, the SMS also comprises her current GPS location. In this case, the worker is both the User and the Tag Owner 6. She specifies, by configuring the appropriate entries 15, 16, 17, 18 in the database 8 on tag management server 7, to which number the SMS should be sent, and what data should be included. If the time when she scans the handlebar tag is later than 18.30, a different data record 15, 16, 17, 18 is automatically selected from the tag management server 7 on the basis of the tag identifying data 5 and the current time, 18.30: this different data record 15, 16, 17, 18 comprises a "send SMS" function which sends a message with a more apologetic tone. If the couple's home is equipped with an oven which can be remotely controlled from the mobile communications device via internet, or SMS, for example, this function can also be added to the appropriate record(s) in the instruction database 8 on the tag management server 7, so that the oven will be automatically switched on when the handlebar tag 4 is scanned.

## Claims

1. A tag management system for controlling a function (3) of a mobile communications device (1) in dependence upon tag identifying data (5) read from a contactlessly readable tag (4) by the mobile communications device (1), the system comprising the mobile communications device (1) and a tag management server (7);
the mobile communications device (1) and the tag management server (7) being capable of remotely communicating with one another,
the mobile communications device (1) comprising a first application (2) for controlling the function (3) of the mobile communications device (1),
the mobile communications device (1) comprising tag identifying means for contactlessly reading tag identifying data (5) from the contactlessly readable tag (4),
the mobile communications device (1) comprising data request transmission means for sending a data request signal (19a, 25) to the tag management server (7), the data request signal (19a, 25) comprising the tag identifying data (5),
the tag management server (7) comprising a database (8) comprising one or more data records (15, 16, 17, 18), the or each data record (15) containing instructions and/or parameters for controlling the application (2),
the tag management server (7) comprising data request receiving means (20) adapted to receive the data request signal (19a, 25) from the first mobile communications device (1),
the tag management server (7) further comprising data record identifying (20) means adapted to identify, on the basis of the scanned tag identifying data (5), a first data record (15) among the one or more data records (15, 16, 17, 18) in the database (8), and
the tag management server (7) further comprising data transmitting means (20) adapted to transmit the one or more instructions and/or parameters (15') of the first data record (15) to the first mobile communications device (1),
the first application (2) of the mobile communications device (1) being adapted to receive the instructions and/or parameters (15') of the first data record (15) and to execute the said instructions (15'), and/or to process the said parameters (15'), thereby performing the said function of the mobile communications device (1) in dependence on the instructions (15'), and/or the parameters (15') of the first data record (15) selected in dependence of the tag identifying data (5).

2. A tag-management server (7) comprising:
one or more data records (15, 16, 17, 18) in a database (8), the or each data record (15, 16, 17, 18) comprising one or more instructions and/or parameters for controlling a function of a communications device (2),
data request receiving means (20) adapted to receive a data request signal (19a, 25) comprising scanned tag identifying data (5) from the mobile communications device (1),
data record identifying means (20) adapted to identify, on the basis of the scanned tag identifying data (5), a first data record (15) among the one or more data records (15, 16, 17, 18) in the database (8), and
data transmitting means (20) adapted to transmit the one or more instructions and/or parameters (15') of the first data record (15) to the mobile communications device (1).

3. An application method (2) for a mobile communications device (1), for executing a function (3) of the mobile communications device (1) in dependence upon tag identifying data (5) read from a contactlessly readable tag (4) by the mobile communications device (1), the method comprising:
a tag-reading step, wherein the mobile communications device (1) reads the tag identifying data (5) from the contactlessly readable tag (4),
a data request step, wherein the mobile communications device (1) transmits a data request signal (19a, 25) to a tag-management server (7), the data request signal (19a, 25) comprising at least the tag-identifying data (5),
a receiving step, wherein the mobile communications device (1) receives from the tag-management server (7) instruction and/or parameter data (15') of a first data record (15) of the tag-management server (7) identified on the basis of the tag-identifying data (5), and
an execution step, wherein the mobile communication device (1) executes a function (3) in accordance with the instruction and/or parameter data (15') received from the tag-management server (7).

4. A tag management server (7) operating method comprising:
a data record storing step, wherein at least one data record (15, 16, 17, 18) is stored in a database (8) of the tag management server (7), the at least one data record (15, 16, 17, 18) comprising instruction and/parameter data for controlling a function (3) of a mobile communications device (1),
a data-request receiving step, wherein a data request signal (19a, 25) containing tag-identifying information (5) is received by the tag management server (7) from the mobile communications device (1),
a data record identifying step wherein a first data record (15) is identified among the one or more data records (15, 16, 17, 18) of the database (8) on the basis of the tag-identifying information (5), and
a data transmitting step wherein the instruction and/or parameter data (15') of the first data record (15) are transmitted to the mobile communications device (1).

5. Application method according to claim 3, wherein the transmission of the data request step is initiated automatically upon completion of the tag reading step.

6. Application method according to claim 3 or claim 5, wherein one or more of the tag-reading step, the data request step, the receiving step and the execution step are performed or controlled by one or more applications (2) installed in the mobile communications device (1), the method comprising an application checking step of checking whether the application or applications (2) required to complete the tag-reading step, the data request step, the receiving step and/or the execution step function are operably installed on the mobile communications device and, if not, retrieving one or more missing applications (2) from a second server (7).

7. Application method according to claim 6, wherein address information of the second server (7) is stored in the contactlessly readable tag (4) and read in the tag reading step.

8. Application method according to one of claims 3, 5, 6 or 7,
wherein one or more of the tag-reading step, the data request step, the receiving step and the execution step are performed automatically, without intervention from the user.

9. Application method according to one of claims 3 or 5 to 8, comprising a user-dialog step of acquiring user-input data for controlling the execution step.

10. System according to claim 1, or application method according to claim 3, 5 or 6, wherein an access address of the tag management server (7) is stored in the mobile communications device (1).

11. System or application method according to claim 10, wherein the access address of the tag management server (7) is stored in the mobile communications device (1) in encoded and/or encrypted form.

12. System, server, application method or operating method according to one of the preceding claims, wherein the data request signal (19a, 25) comprises device-identifying data identifying the mobile communications device (1) or a type of the mobile communications device (1), and wherein the first data record is identified on the basis of the device-identifying data.

13. System, server, application method or operating method according to one of the preceding claims, wherein the data request signal (19a, 25) comprises user parameters of a user of the mobile communication device (1), or of a type of the user of the mobile communications device (1), and wherein the first data record (15) is identified on the basis of the user parameters.
